# EUROPEAN PATENT SPECIFICATION

(11) **EP 1 597 134 B1**
(45) Date of publication and mention of the grant of the patent: **17.01.2007**
(21) Application number: 04714245.0
(22) Date of filing: 25.02.2004
(51) Int. Cl.: B62D 21/02, B62D 21/03, B60G 3/18, B60P 1/28, B62D 21/20

(54) **SEMI-TRAILER CHASSIS AND WHEEL SUSPENSION**
SATTELAUFLIEGERRAHMEN UND -RADAUFHÄNGUNG
CHASSIS DE SEMI-REMORQUE ET SUSPENSION DE ROUES

(30) Priority: 27.02.2003 BE 200300130
(43) Date of publication of application: 23.11.2005
(73) Proprietor: TG Consulting, Besloten Vennootschap met Beperkte Aansprakelijkheid, 3960 Bree (BE)
(72) Inventor: GEUSSENS, Tony, Lambert, Guy, Ghislain, B-3960 Bree (BE)
(74) Representative: Donné, Eddy
(86) International application number: PCT/BE2004/000025
(87) International publication number: WO 2004/076263

(56) References cited:
- EP-A- 1 122 101
- EP-A- 1 127 749
- DE-A- 19 638 465
- DE-C- 10 035 273
- DE-U- 9 306 171

## Description

The present invention concerns an improved semi-trailer.

It is known that a conventional semi-trailer mainly consists of a chassis, consisting of two parallel, supporting, longitudinal runners which are connected to each other by means of cross beams, and of one or several rigid wheel axles with single or double wheels upon which the chassis is provided by means of springs provided between the longitudinal runners and the wheel axles.

It is also known that with such conventional semi-trailers, the above-mentioned longitudinal runners extend between the wheels of the wheel axles at some sixty centimetres from the side edges of the chassis.

Usually, such a semi-trailer is equipped with a loading floor, provided between two edge profiles on the side edges of the chassis, whereby these edge profiles can be used to apply a superstructure in the shape of a tilt construction, sidewalls or the like, or which can be used to lash down loads or the like.

A disadvantage of the known semi-trailers, as i.e. disclosed in DE 100 35 273 (which also discloses the preamble to claim 1) is that they have a relatively large empty weight, among others due to the relatively large own weight of the longitudinal runners, edge profiles and wheel axles.

A disadvantage linked thereto is that the loading capacity of these known semi-trailers is relatively limited, since this loading capacity depends on the difference between the maximum permissible weight on the road and the above-mentioned empty weight.

Another disadvantage is that the entire loading floor is always situated above the wheel level, so that the centre of gravity of the load is always situated relatively far from the ground, which is disadvantageous to the stability.

The present invention aims to remedy the above-mentioned and other disadvantages by providing an improved semi-trailer which is considerably lighter than the known semi-trailers and which moreover is much more stable during transport, so that the risk of tilting in bends or on bad roads is drastically reduced.

To this end, the invention concerns an improved semi-trailer which mainly consists of a chassis with at least two supporting longitudinal runners, connected to each other by means of cross connections, and two or several single or double wheels carrying the chassis, whereby the longitudinal runners are situated on the side edges of the chassis at a distance from each other which is larger than the distance between the wheels, and whereby every wheel is fixed independently of the other wheels on the chassis by means of two parallel supporting arms which are provided in pairs on the chassis (14), on top of each other and at a distance from each other, and which supporting arms (32-33) are hinge-mounted on a central longitudinal directed support (24) which is part of the chassis (14).

An advantage of an improved semi-trailer according to the invention is that, since the longitudinal runners are situated on the side edges of the chassis, these longitudinal runners can also serve as edge profiles, such that the edge profiles can be omitted in this case, which allows for a considerable weight saving in the order of magnitude of 350 kg.

Another advantage is that, by replacing the rigid wheel axles by independently spring-mounted wheel suspensions with hinged supporting arms, an additional weight saving of some 80 to 100 kg per axle becomes possible, such that, for example for a semi-trailer with three axles, some 300 kg can be easily saved.

An additional advantage, related to the use of independently spring-mounted wheels, is that the semi-trailer's stability is improved as the wheels keep better contact with the road, which is particularly important on bad grounds.

Also the wear of the tyres is considerably less when independently spring-mounted wheels are used.

Each of the above-mentioned supporting longitudinal runners is preferably formed of a profile provided with a reinforcement in the shape of a box-like construction in a central part of the longitudinal runner over a certain length, in particular in the part of the longitudinal runner situated between the wheels and the journal of the semi-trailer and which, as is known, is loaded the most.

Thanks to the above-mentioned reinforcement, a profile can be used for the construction of the longitudinal runners which is considerably lighter than the usual I-profiles which have been used until now to form the longitudinal runners in the known semi-trailers, such that this allows for a considerable additional weight saving.

Summing up, we can say that, for a semi-platform trailer having a length of 13 meters, a total cumulated weight saving of some 750 kg can be realised, which implies that an extra load of the same weight can be carried.

According to a preferred embodiment, one or several of the above-mentioned cross connections have a concave form, such that the chassis, in the places where these cross beams are situated, will so to say have a recessed part in relation to the level of the longitudinal runners, such that the load can be placed lower in this recessed part than with the known semi-trailers, and the centre of gravity of the load will be situated lower as a result, which is reflected in an improved stability.

In order to better explain the characteristics of the invention, the following preferred embodiments of an improved semi-trailer according to the invention are described as an example only without being limitative in any way, with reference to the accompanying drawings, in which:
figure 1 schematically represents a side view of a known semi-trailer;
figure 2 represents a rear view of the semi-trailer according to figure 1 to a larger scale;
figure 3 schematically represents a side view of an improved semi-trailer according to the invention;
figure 4 represents a top view of the improved semi-trailer according to figure 3;
figure 5 represents the part indicated by F5 in figure 4 to a larger scale;
figure 6 is a section according to line VI-VI in figure 5;
figure 7 represents a section according to line VII-VII in figure 5 to a larger scale;
figure 8 represents a view in perspective of the part indicated by F8 in figure 7;
figure 9 represents a section according to line IX-IX in figure 5 to a larger scale;
figure 10 represents a section according to line X-X in figure 9;
figures 11 to 14 schematically represent some variants of figure 6;
figure 15 represents a view as in figure 3 to a smaller scale, but for a semi-trailer for containers;
figure 16 represents a top view of the semi-trailer from figure 15;
figures 17 and 18 represent variants of the semi-trailer according to figure 15.

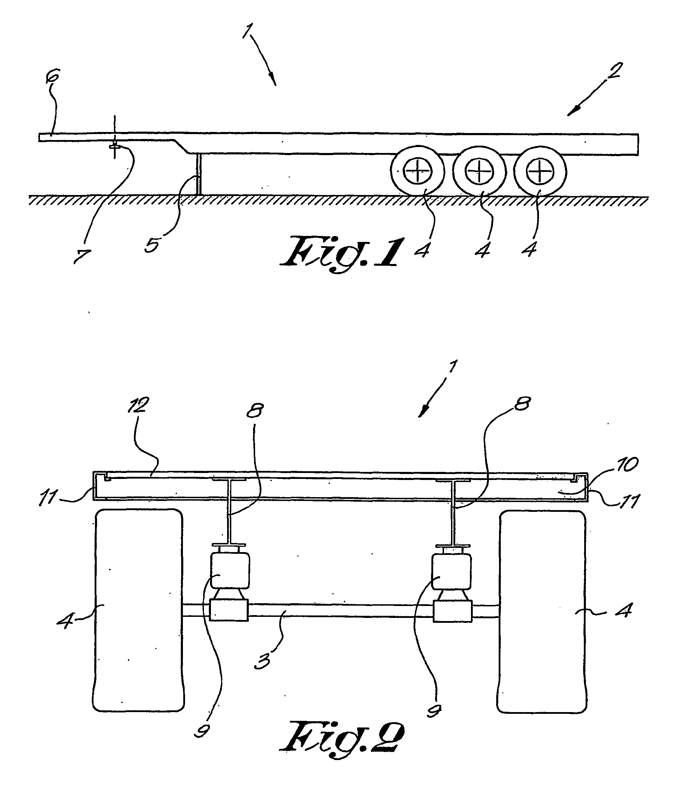

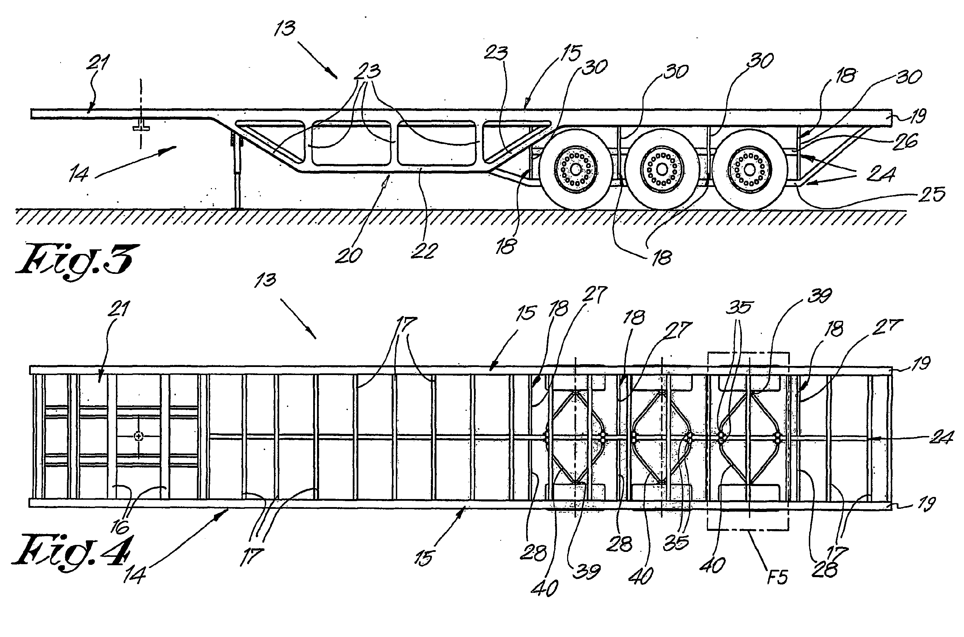

Figures 1 and 2 represent a semi-trailer 1 of a known type by way of example, with a chassis 2 which in this case is suspended at the back on three rigid axles 3 with some wheels 4 and which is provided with ground props 5 in front with which the semi-trailer 1, as represented in figure 1, as separate from a lorry, can be erected in a parking place or the like, and which is equipped with a coupling element 7 on the journal 6 of the semi-trailer 1 with which the semi-trailer 1 can be coupled to a lorry in a hingeable manner.

The chassis 2 of this known semi-trailer, as is usual, is formed of two parallel longitudinal runners 8 in the shape of two heavy I-profiles which are provided on the rigid axles 3 by means of springs 9 and which are connected to each other by means of cross profiles 10 extending on either side of the chassis 2 and onto which are fixed two edge profiles 11 on the side edges of the chassis 2 in between which is provided a loading floor 12.

The above-mentioned I-profiles in this case have a constant section, save in the front part forming the journal 6 of the chassis, where the I-profile is less high.

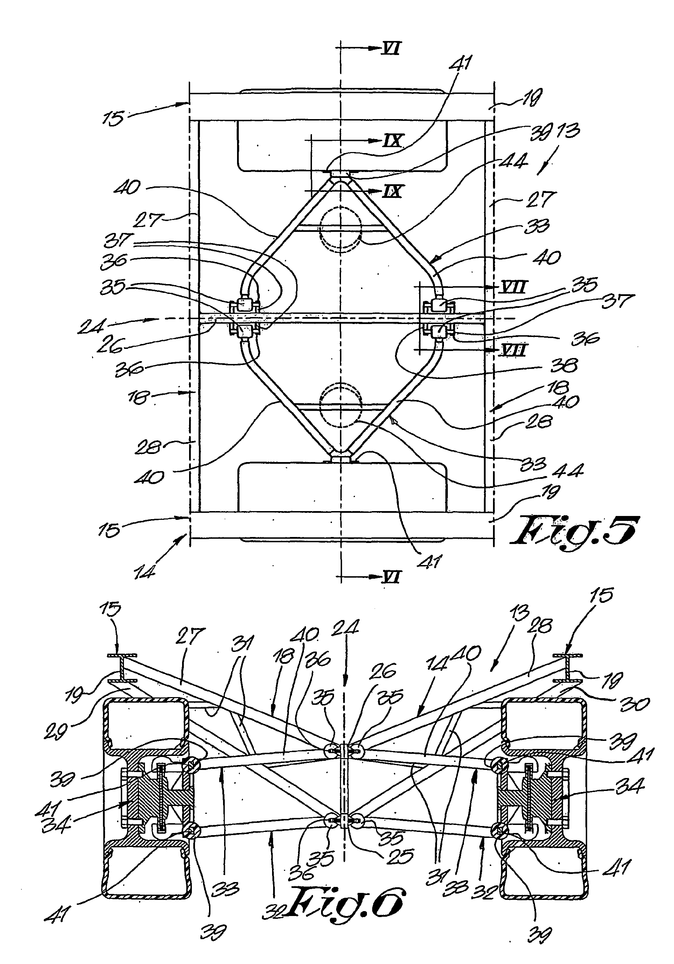

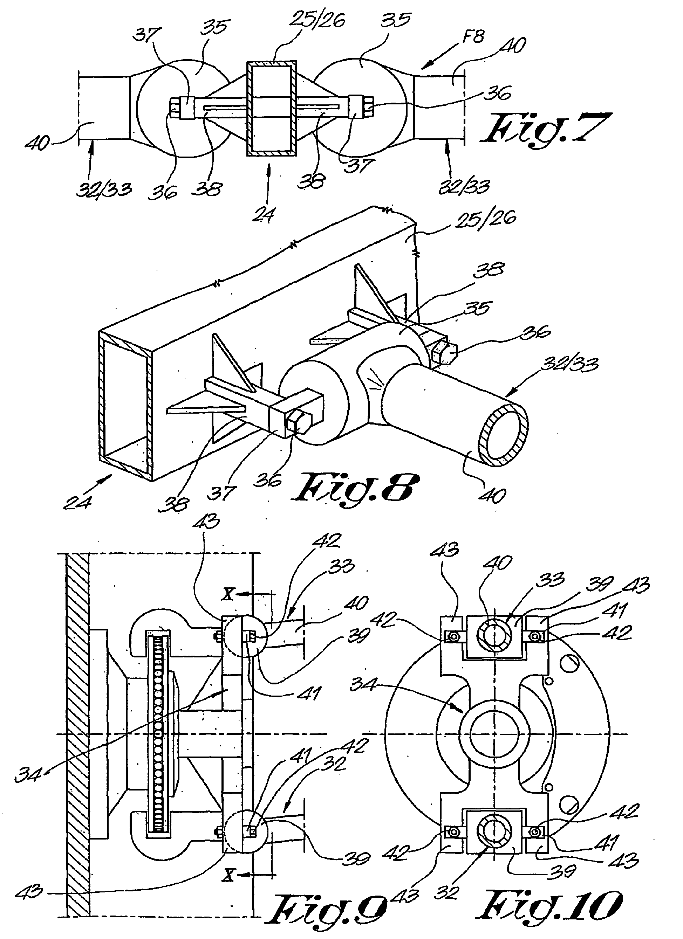

Figures 3 to 6 represent an improved semi-trailer 13 according to the invention with comparable dimensions and the same number of wheel axles as the above-described known conventional semi-trailer 1, but in this case with independently suspended wheels 4.

The chassis 14 of this semi-trailer 13 is in this case also formed of two parallel longitudinal runners 15 which are connected to each other by means of cross connections 16-17-18, whereby these longitudinal runners 15 are not provided between the wheels 4 according to the invention, but on the side edges of the chassis 14, at a distance which is larger than the lateral clearance between the wheels, and whereby these longitudinal runners 15 also form edge profiles onto which can be fixed a non-represented loading floor and/or a superstructure, and upon which can also be provided points of attachment for lashing down loads or the like.

Every longitudinal runner 15 is formed of a profile 19 according to the invention, for example a C-profile or a welded I-profile as represented, and of a reinforcement in the shape of a flat box-like construction 20 extending over a certain length in a central part of the longitudinal runner 15, which part is mainly situated between the wheels 4 and the journal 21, where the bending moments caused by the loads are the largest.

Thanks to said box-like construction, the moment of inertia of the longitudinal runner is locally enlarged, such that a larger resistance against bending is obtained.

The box-like construction 20 extends downward as of the I-profile 19 and is formed of the I-profile 19 itself and a profile 22 running parallel to it which is connected to the I-profile 19 by means of profiles 23.

In this configuration, every longitudinal runner 15 can be made much lighter than a corresponding longitudinal runner 8 of the above-described known semi-trailer 1, such that the chassis 14 as a whole, partly thanks to the fact that no extra edge profiles 11 are required in this case, can be made considerably lighter than the chassis 2 of a comparable known semi-trailer 1.

In the middle of the chassis 14, between the wheels 4, is provided a central support 24 which in this case is formed of two central longitudinal profiles 25 and 26 situated on top of each other, which are each attached to the two longitudinal runners 15 by means of two slantingly rising profiles, 27-28 and 29-30 respectively, of the cross connections 18.

In the given example, the cross connections 18 on either side of each wheel 4 are formed of V-shaped box-like constructions which mainly consist of the above-mentioned profiles 27-28-29-30 which are connected to each other by means of profiles 31.

Every wheel 4 is independently suspended onto the chassis 14 by means of two parallel supporting arms, 32 and 33 respectively, which are hinge-mounted between the above-mentioned longitudinal profiles 25-26 and a supporting plate 34 for the wheel 4 concerned, in particular a supporting plate 34 in which the wheel stub is provided.

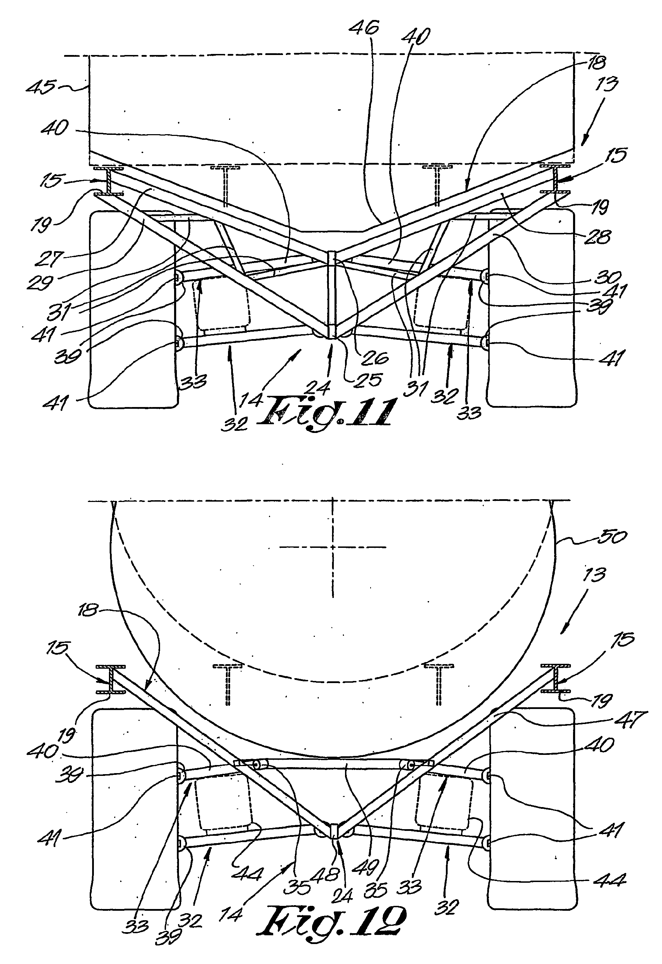

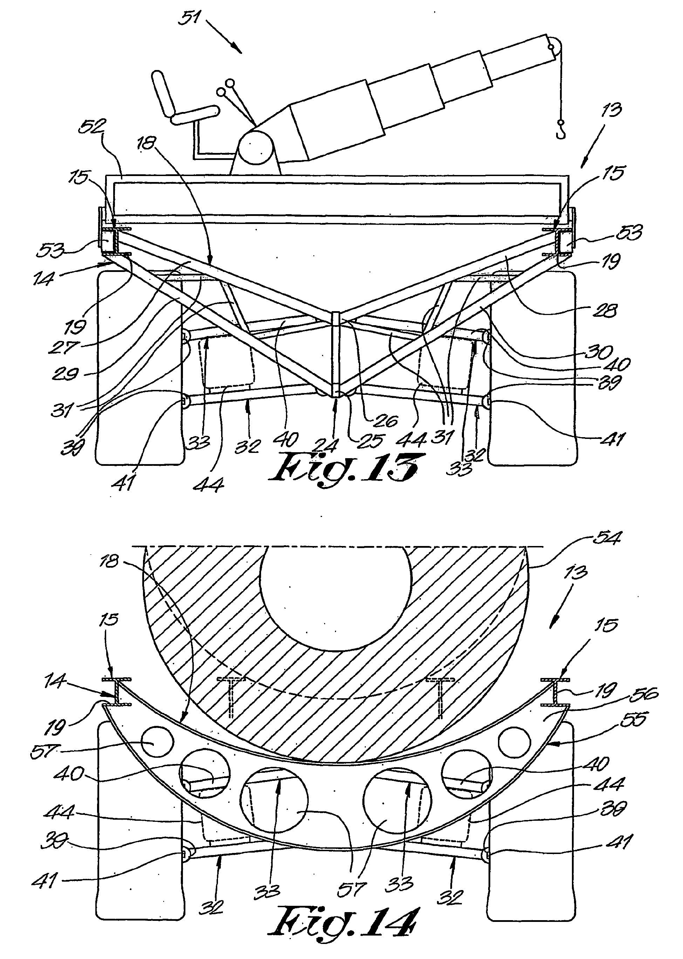

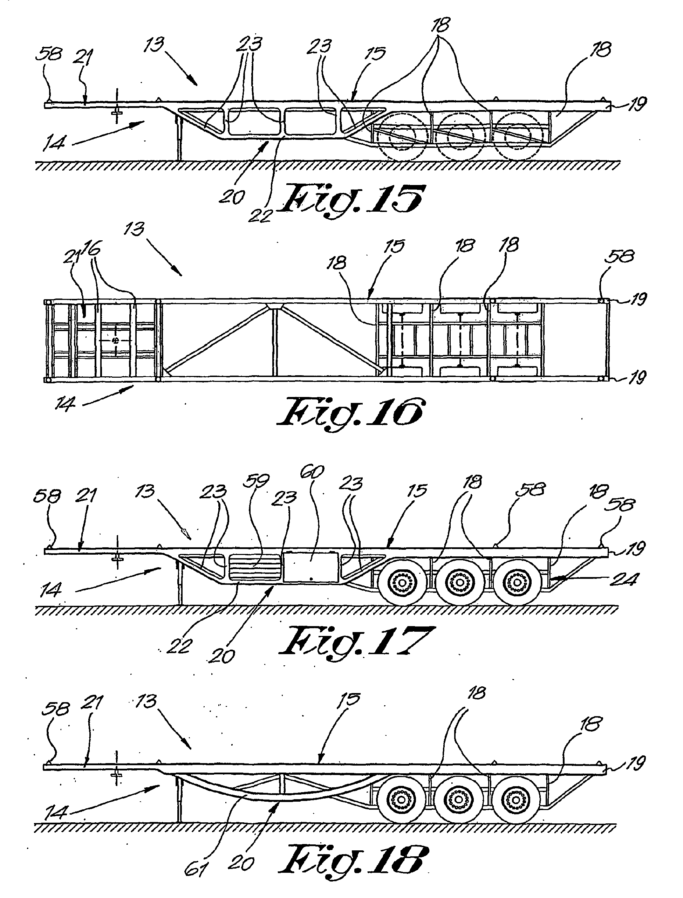

Every supporting arm 32-33 is mainly formed of two hinge joints 35 which, as is represented in figures 7 and 8, are fixed on supports 38 on one of either longitudinal profiles 25-26 with their hinge pin 37, as well as by means of a third hinge joint 39 which is connected to the above-said hinge joints 35 by means of two rods 40 in a triangular bracing and whose hinge pin 41, as represented in figures 9 and 10, is fixed to the above-mentioned supporting plate 34 by means of bolts 42, which is provided with a forked part with two legs 43 at the top and at the bottom to this end, in between which the hinge joint 39 concerned of a lower supporting arm 32 or of a top supporting arm 33 is provided.

Although, in the figures, the hinge joints 35 have coaxial axes, it is not excluded for the hinge joints 35 to be mounted at an angle in relation to each other.

Between the moving supporting arms 32-33 and the chassis 14 is provided a suspension 44, for example in the shape of a known pneumatic or hydraulic suspension.

The vertical distance between the hinge joints on one and the same supporting plate 34 is preferably equal to the vertical distance between the hinge joints 35 on the supports formed of the lower and the top longitudinal profile 25-26, such that the supporting arms 25-26 always remain parallel to each other, and the wheel 4 attached to it stays mainly parallel to itself.

Thanks to the independent suspension of the wheels 4 in the shape of parallel supporting arms 32-33, a major additional weight saving can be obtained in relation to the above-mentioned known semi-trailer 1 with rigid wheel axles 3, and the semi-trailer 13 will moreover be more stable as the wheels 4 keep better contact with the ground.

It is clear that on the longitudinal profiles 15 can be provided a loading floor, not represented in the figures, which rests for example on the cross connections 16-17.

Figure 11 represents a variant of a semi-trailer 13 according to the invention which in this case is embodied with a bucket 45 whose bottom 46 is made trough-shaped, and whereby this bottom 46 is mainly provided between the longitudinal runners 15.

It is clear from figure 11 that, in this case, the bucket 45 can be brought considerably closer to the ground than in the case of a conventional semi-trailer 1 whereby the bucket is provided directly on the longitudinal runners 8, as is schematically represented by means of a dashed line.

As a result, the centre of gravity of the bucket 45 is pulled down compared to a conventional tipping trailer, as a result of which a tipping trailer according to the invention will behave in a more stable manner during transport.

It is clear that, in this case, the cross connections 17-18 must have a concave form over a certain length of the semi-trailer 13, so that a bed is formed so to say in which the bucket 45 fits.

Figure 12 represents another variant of a semi-trailer 13 according to the invention, in particular a semi-trailer 13 for a tank 50 for the transport of liquids or bulk goods.

In this case, the cross connections 17-18 are formed of two profiles 47 with which a longitudinal profile 48 is fixed to the longitudinal runners 15, and whereby a cross connection 49 is provided between the profiles 47.

The longitudinal profile 48 and the cross connection 49 in this case form the above-mentioned central support 24 upon which the supporting arms 32-33 are fixed with their hinge joints 35.

As appears from the figure, the centre of gravity of the tank 50 is situated considerably lower than that of a tank of a comparable known semi-trailer 1 represented by means of a dashed line.

Figure 13 represents another variant whereby the semi-trailer 13 is provided with a crane 51 provided on a vehicle 52 whose wheels 53 can move on the longitudinal runners 15.

In this case also, a considerable weight saving is obtained since no special rails must be provided as is the case with the known semi-trailers 13.

Figure 14 represents a semi-trailer 13 for the transport of coils 54 of paper, metal or the like, which in this case also can be provided lower to the ground than in the case of the known semi-trailers, as represented by means of a dashed line.

The cross connections 17-18 are in this case formed of predominantly sickle-shaped I-profiles 55 with a predominantly sickle-shaped invert plate 56 in which are provided holes 57 in order to save weight. Also a I-profile bent in the shape of a U could be used to this end.

Figures 15 and 16 represent a variant for an application as a semi-trailer 13 for a container, whereby what are called twist-lock couplings 58 are in this case provided on the longitudinal runners 15 for fastening a container.

In this case, no extra heavy cross profiles 11 must be provided for fastening the above-mentioned couplings 58, which implies an extra weight saving and which considerably simplifies the construction of such a container trailer.

Figure 17 represents a variant whereby the box-like constructions 20 are used as a frame in this case for applying plates or the like to mark out storage rooms to store empty pallets 59, tools, a spare wheel or the like in, and whereby these compartments can be either or not provided with a lockable access hatch 60 or the like.

Figure 18 represents a final variant whereby the box-like construction is made with a bent I-profile 61.

Although in the figures, the wheels 4 are tracking wheels, it is not excluded for a semi-trailer 13 according to the invention to be equipped with driven wheels by replacing the above-mentioned wheel hubs 34 by hinge-mounted stub axles which are connected to hydraulic, pneumatic or other controls by means of rods.

The invention is by no means limited to the above-described embodiments given as an example and represented in the accompanying drawings; on the contrary, such an improved semi-trailer according to the invention can be made in all sorts of shapes and dimensions while still remaining within the scope of the invention as defined by the accompanying claims.

## Claims

1. Semi-trailer which mainly consists of a chassis (14) with at least two supporting longitudinal runners (15), connected to each other by means of cross connections (16-17-18), and two or several single or double wheels (4) carrying the chassis (14) such that wheels (4) are located on either side of the chassis defining a lateral clearance therebetween, whereby the longitudinal runners (15) are situated on the side edges of the chassis (14) at a distance from each other which is larger than the lateral clearance between the wheels (4), **characterized in that** every wheel (4) is fixed independently of the other wheels (4) on the chassis (14) by means of two parallel supporting arms (32-33) which are provided in pairs on the chassis (14), on top of each other and at a vertical distance from each other and which supporting arms (32-33) are hinge-mounted at their far ends on a central longitudinal directed support (24) which is part of the chassis (14).

2. Semi-trailer according to claim 1, **characterised in that** each above-mentioned longitudinal runner (15) on the side edge of the chassis (14) is formed of an I-profile (19) which is provided with a reinforcement in the shape of a box-like construction (20) over a certain length.

3. Semi-trailer according to claim 2, **characterised in that** the above-mentioned box-like construction (20) mainly extends between the wheels (4) and the journal (21) of the semi-trailer (13).

4. Semi-trailer according to claim 3, **characterised in that** the above-mentioned box-like construction (20) extends downward in relation to the above-mentioned I-profile (19).

5. Semi-trailer according to claim 1, **characterised in that** the above-mentioned support is formed of two longitudinal profiles (25-26) situated at different heights, fixed on the above-mentioned cross connections (18).

6. Semi-trailer according to claim 1 or 5, **characterised in that** every supporting arm (32-33) is mainly formed of three hinge joints (35-39) which are connected to each other by means of two rods (40) in a triangular bracing.

7. Semi-trailer according to claim 5,
**characterised in that** one or several of the above-mentioned cross connections (17-18) have a concave shape.

8. Semi-trailer according to claim 7, **characterised in that** the above-mentioned cross connections (17-18) are formed of a box-like construction.

9. Semi-trailer according to claim 7, **characterised in that** the above-mentioned cross connections (17-18) are formed of a predominantly sickle-shaped I-profile (55).

10. Semi-trailer according to claim 1, **characterised in that** in the case of semi-trailers (13) with several axles, a cross connection (18) is provided at least between each pair of adjacent wheel axles upon which the above-mentioned central support for the supporting arms (32-33) is fixed.

11. Semi-trailer according to claim 1, **characterised in that** it is provided with a loading floor whose edge profiles are formed of the above-mentioned longitudinal runners (15) on the side edges of the chassis (14).

12. Semi-trailer according to claim 1, **characterised in that** it is provided with what are called twist-lock couplings (58) for fastening a container, which couplings (58) are provided on the supporting longitudinal runners (15) on the side edges of the chassis (14).

## Patentansprüche

1. Sattelauflieger, der im Wesentlichen aus einem Rahmen (14) mit wenigstens zwei tragenden Längsträgern (15), die mittels Querverbindungen (16-17-18) miteinander verbunden sind, und zwei oder mehreren Einzel- oder Zwillingsrädern (4), die den Rahmen (14) tragen, besteht, sodass Räder (4) sich an jeder Seite des Rahmens befinden, wodurch sie dazwischen einen lateralen Freiraum definieren, wobei die Längsträger (15) sich an Seitenkanten des Rahmens (14) befinden, in einem Abstand zueinander, der größer als der laterale Freiraum zwischen den Rädern (4) ist, **dadurch gekennzeichnet, dass** jedes Rad (4) unabhängig von den anderen Rädern (4) an dem Rahmen (14) befestigt ist, mittels zweier paralleler Stützarme (32-33), die in Paaren an dem Rahmen (14) angebracht sind, übereinander und in einem vertikalen Abstand voneinander, und welche Stützarme (32-33) an ihren Enden scharnierbar auf einem zentralen Längsträger (24) montiert sind, der Teil des Rahmens (14) ist.

2. Sattelauflieger gemäß Anspruch 1, **dadurch gekennzeichnet, dass** jeder oben erwähnte Längsträger (15) an der Seitenkante des Rahmens (14) von einem I-Profil (19) gebildet wird, das über eine bestimmte Länge mit einer Verstärkung in Form einer Fachwerkkonstruktion (20) versehen ist.

3. Sattelauflieger gemäß Anspruch 2, **dadurch gekennzeichnet, dass** die oben erwähnte Fachwerkkonstruktion (20) sich im Wesentlichen zwischen den Rädern (4) und dem Auflegeteil (21) des Sattelaufliegers (13) erstreckt.

4. Sattelauflieger gemäß Anspruch 3, **dadurch gekennzeichnet, dass** die oben erwähnte Fachwerkkonstruktion (20) sich in Bezug zu dem oben erwähnten I-Profil (19) nach unten erstreckt.

5. Sattelauflieger gemäß Anspruch 1, **dadurch gekennzeichnet, dass** der oben erwähnte Träger von zwei auf den oben erwähnten Querverbindungen (18) befestigten Längsprofilen (25-26) gebildet wird, die sich auf verschiedenen Höhen befinden.

6. Sattelauflieger gemäß Anspruch 1 oder 5, **dadurch gekennzeichnet, dass** jeder Stützarm (32-33) im Wesentlichen von drei Scharniergelenken (35-39) gebildet wird, die mittels zweier Stangen (40) in einem Dreiecksverband miteinander verbunden sind.

7. Sattelauflieger gemäß Anspruch 5, **dadurch gekennzeichnet, dass** eine oder mehrere der oben erwähnten Querverbindungen (17-18) eine konkave Form haben.

8. Sattelauflieger gemäß Anspruch 7, **dadurch gekennzeichnet, dass** die oben erwähnten Querverbindungen (17-18) von einer Fachwerkkonstruktion gebildet werden.

9. Sattelauflieger gemäß Anspruch 7, **dadurch gekennzeichnet, dass** die oben erwähnte Querverbindungen (17-18) von einem vorwiegend sichelförmigen I-Profil (55) gebildet werden.

10. Sattelauflieger gemäß Anspruch 1, **dadurch gekennzeichnet, dass** im Fall von Sattelaufliegern (13) mit mehreren Achsen eine Querverbindung (18) wenigstens zwischen jedem Paar benachbarter Radachsen, worauf der obenerwähnte zentrale Träger für die Stützarme (32-33) befestigt ist, vorgesehen ist.

11. Sattelauflieger gemäß Anspruch 1, **dadurch gekennzeichnet, dass** er mit einem Ladeboden versehen ist, dessen Kantenprofile von den oben erwähnten Längsträgern (15) an den Seitenkanten des Rahmens (14) gebildet werden.

12. Sattelauflieger gemäß Anspruch 1, **dadurch gekennzeichnet, dass** er mit sogenannten Twistlockkopplungen (58) zum Befestigen eines Containers versehen ist, welche Kopplungen (58) an den tragenden Längsträgern (14) an den Seitenkanten des Rahmens (14) angebracht sind.

## Revendications

1. Semi-remorque qui est constitué principalement par un châssis (14) comprenant au moins deux membrures longitudinales de support (15) qui sont reliées l'une à l'autre au moyen de traverses (16-17-18), et par deux roues simples ou doubles ou plus (4) supportant le châssis (14), de telle sorte que les roues (4) sont disposées de chaque côté du châssis en définissant entre elles un espace libre latéral, les membrures longitudinales (15) étant disposées sur les bords latéraux du châssis (14) à une distance l'une de l'autre qui est supérieure à l'espace libre latéral ménagé entre les roues (4), **caractérisé en ce que** chaque roue (4) est fixée de manière indépendante à l'autre roue (4) sur le châssis (14) au moyen de deux bras de support parallèles (32-33) qui sont prévus par paires sur le châssis (14), les uns au-dessus des autres et à une distance verticale les uns des autres, lesdits bras de support (32-33) étant montés en articulation à leurs extrémités éloignées sur un support central (24) orienté en direction longitudinale qui fait partie du châssis (14).

2. Semi-remorque selon la revendication 1, **caractérisé en ce que** chaque membrure longitudinale susmentionnée (15) sur le bord latéral du châssis (14) prend la forme d'un profilé en I (19) qui est muni d'un renforcement sous la forme d'une structure en forme de boîte (20) sur une certaine longueur.

3. Semi-remorque selon la revendication 2, **caractérisé en ce que** la structure en forme de boîte susmentionnée (20) s'étend principalement entre les roues (4) et le tourillon (21) du semi-remorque (13).

4. Semi-remorque selon la revendication 3, **caractérisé en ce que** la structure en forme de boîte susmentionnée (20) s'étend vers le bas par rapport au profilé en I susmentionné (19).

5. Semi-remorque selon la revendication 1, **caractérisé en ce que** le support susmentionné prend la forme de deux profilés longitudinaux (25-26) disposés à des hauteurs différentes, fixés sur les traverses susmentionnées (18).

6. Semi-remorque selon la revendication 1 ou 5, **caractérisé en ce que** chaque bras de support (32-33) est formé principalement à l'aide de trois articulations (35-39) qui sont reliées l'une à l'autre au moyen de deux tiges (40) dans un renfort triangulaire.

7. Semi-remorque selon la revendication 5, **caractérisé en ce qu'**une ou plusieurs des traverses susmentionnées (17-18) possèdent une configuration concave.

8. Semi-remorque selon la revendication 7, **caractérisé en ce que** les traverses susmentionnées (17-18) prennent la forme d'une structure analogue à une boîte.

9. Semi-remorque selon la revendication 7, **caractérisé en ce que** les traverses susmentionnées (17-18) prennent la forme d'un profilé I (55) possédant principalement la configuration d'une faucille.

10. Semi-remorque selon la revendication 1, **caractérisé en ce que**, dans le cas de semi-remorques (13) à plusieurs trains de roues, on prévoit une traverse (18) au moins entre chaque paire de trains de roues adjacente, à laquelle vient se fixer le support central susmentionné pour les bras de support (32-33).

11. Semi-remorque selon la revendication 1, **caractérisé en ce qu'**il est muni d'un plancher de chargement dont les profilés marginaux sont constitués par les membrures longitudinales susmentionnées (15) sur les bords latéraux du châssis (14).

12. Semi-remorque selon la revendication 1, **caractérisé en ce qu'**il est muni de ce que l'on appelle des attelages du type à verrou rotatif conique (58) pour la fixation d'un conteneur, lesdits attelages (58) étant prévus sur les membrures longitudinales de support (15) sur les bords latéraux du châssis (14).
